# EUROPÄISCHE PATENTSCHRIFT

(11) **EP 2 037 226 B1**
(45) Veröffentlichungstag und Bekanntmachung des Hinweises auf die Patenterteilung: **17.02.2016**
(21) Anmeldenummer: 08005213.7
(22) Anmeldetag: 19.03.2008
(51) Int. Cl.: B61L 25/02, B66C 13/46, G01D 5/26, G05D 1/02, G01D 5/347, B66C 13/16, G01D 5/249

(54) **Verfahren und Vorrichtung zum Bestimmen der Position eines Fahrzeugs, Computerprogramm und Computerprogrammprodukt**
Method and device for determining the position of a vehicle, computer program and computer program product
Procédé et dispositif destinés à la détermination de la position d`un véhicule, programme informatique et produit de programme informatique

(30) Priorität: 12.09.2007 DE 102007043498; 12.09.2007 DE 202007012798 U
(43) Veröffentlichungstag der Anmeldung: 18.03.2009
(73) Patentinhaber: Pepperl + Fuchs GmbH, 68307 Mannheim (DE)
(72) Erfinder: Hofmann, Hilmar, 69502 Hemsbach (DE); Opper, Rüdiger, 67240 Bobenheim-Roxheim (DE); Kirsch, Martin, 68259 Mannheim (DE)
(74) Vertreter: Schiffer, Axel Martin

(56) Entgegenhaltungen:
- EP-A- 1 099 936
- DE-A1- 3 150 977
- DE-A1- 19 910 933
- DE-A1-102004 018 404
- DE-A1-102006 010 161
- DE-B3- 10 341 297
- US-A- 3 842 923
- US-A- 4 363 369

## Beschreibung

Die vorliegende Erfindung betrifft in einem ersten Aspekt ein Verfahren zum Bestimmen der Position eines Fahrzeugs nach dem Oberbegriff des Anspruchs 1.

In einem weiteren Gesichtspunkt bezieht sich die Erfindung auf eine Vorrichtung zum Bestimmen der Position eines Fahrzeugs nach dem Oberbegriff des Anspruchs 11.

Außerdem betrifft die Erfindung ein Computerprogramm und ein Computerprogrammprodukt.

Ein gattungsgemäßes Verfahren ist beispielsweise in DE 199 10 933 A1 offenbart. Hierbei wird ein Fahrzeug entlang einer Bahn, welche grundsätzlich entlang einer beliebigen Kurve verlaufen kann, bewegt und zur Positionsbestimmung sind entlang der Bahn eindimensionale Barcodes als Marker angeordnet.

Die Erfindung bezieht sich insbesondere auf Fahrzeuge wie EinschienenHängebahnen, Regalbediengeräte, Krananlagen oder sonstige verfahrbare Geräte, die entlang einer Bahn oder auf oder parallel zu einer vorgegebenen Fläche verfahrbar sind.

Weitere Positionierverfahren sind in EP 0 039 921 A2, DE 38 25 097 A1, EP 0 116 636 A1, DE 39 10 873 A1, DE 42 09 629 A1 und DE 43 09 863 C1 beschrieben. Diese bekannten Systeme weisen folgende Nachteile auf.

Die erreichbare Genauigkeit der Positionsbestimmung ist durch die Länge der Codemarken oder deren Elemente begrenzt, da die Codeelemente in einer oder mehreren parallelen Spuren längs des Fahrwegs aufgereiht sind und beim Verfahren nacheinander abgetastet werden müssen. Die Packungsdichte der Codeelemente auf dem Codeträger kann aber nicht über ein gewisses Maß hinaus erhöht werden, weil das räumliche Auflösungsvermögen der Abtastelemente, z.B. Lichtschranken, begrenzt ist. Die Länge der Codeträger kann daher nicht unter einen bestimmten Mindestwert verkleinert werden, so dass der Positionsauflösung Grenzen gesetzt sind.

Ferner ist zur lückenlosen Abdeckung eines langen Fahrwegs mit ausreichender Längsauflösung eine große Anzahl von Codeträgern und somit, wenn sich der Codeinhalt längs des Fahrweges nicht wiederholen soll, eine entsprechend große Wortbreite der Codes erforderlich. Eine zunehmende Wortbreite läßt aber nicht nur die Länge der einzelnen Codeträger, sondern vor allem auch den Aufwand und die Kosten für die Codeleser sehr schnell anwachsen.

Ferner geht mit längeren Codeträgern eine geringere Auflösung der Positionsbestimmung einher, so dass eine Realisierung von Fahrwegen von mehreren Kilometern, die z.B. in modernen industriellen Fertigungsstraßen erwünscht oder notwendig sein können, mit hinreichender Auflösung schwierig ist. Diese Problematik wird noch erheblich verschärft, wenn auf den Codeträgem redundante Informationen vorhanden sein sollen, um die Betriebssicherheit des Systems, z.B. dessen Resistenz gegen Verschmutzung oder Beschädigung von Teilen des Codeträgers, zu verbessern und dadurch das Risiko von Ausfällen oder, unter Umständen folgenschweren, Fehlpositionierungen zu verringern.

Ein weiterer Nachteil der genannten Systeme besteht darin, dass eine Positionsbestimmung bei stillstehendem Fahrzeug nicht ohne weiteres möglich ist. Diejenigen Systeme, welche im Durchlichtverfahren arbeiten, sind außerdem mechanisch aufwendig und anfällig gegen Verformungen des Codeträgers. Einige der oben genannten Systeme sind ferner sehr empfindlich gegen eine Änderung der Orientierung der Codeträger gegenüber dem Codeleser.

Ein weiteres Positionsmesssystem für schienengeführte Fahrzeuge ist aus DE 103 41 297 B3 bekannt. Hierbei tastet ein optisches System ein an den Schienen angeordnetes Codeband ab, in welchem Positionsinformationen kodiert sind.

DE 10 2004 018 404 A1 betrifft einen an einem Fahrzeug angebrachten optischen Sensor, der Marken am Wegrand des Fahrzeugs erfasst. Es wird eine in den Marken kodierte Positionsinformation erkannt und zusätzlich durch Ermittlung der Lage eines Markerbilds im Erfassungsbereich des Sensors die Position des Fahrzeugs relativ zur Marke in Bewegungsrichtung bestimmt.

Eine Vorrichtung zur zweidimensionalen Positionsbestimmung bezüglich eines Untergrunds wird in EP 1 099 936 A1 beschrieben. Die Vorrichtung umfasst einen Lesekopf mit einer Kamera, welche zur Positionsbestimmung ein Bild des Untergrunds aufnimmt. Auf dem Untergrund ist ein Muster angebracht, in welchem eine Positionsinformation kodiert ist.

Gegenstand von DE 10 2006 010 161 A1 ist eine Positionsmesseinrichtung, die mit einem optischen Sensor aus einer Codestruktur eine Information über eine Position in der Ebene der Codestruktur liest.

US 3 842 923 und US 4 363 369 handeln von Hängebahnsystemen, bei denen Waagen zum Bestimmen von Lasten auf der Hängebahn integriert sind. In DE 31 50 977 A1 wird eine Einrichtung zur Beseitigung des Einflusses von Führungsfehlern auf die Genauigkeit der Positionsbestimmung von Fahrzeugen beschrieben.

Als eine Aufgabe der Erfindung kann angesehen werden, ein Verfahren bereitzustellen und eine Vorrichtung zu schaffen, welche eine verbesserte Positionsauflösung ermöglichen und längere Fahrwege erlauben. Weiterhin soll auch eine Information darüber bereitgestellt werden, ob und gegebenenfalls wie weit das Fahrzeug von einer Normalbahn abweicht. Außerdem soll ein geeignetes Computerprogramm angegeben werden.

Diese Aufgabe wird in einem ersten Gesichtspunkt der Erfindung durch das Verfahren mit den Merkmalen des Anspruchs 1 gelöst.

In einem weiteren Gesichtspunkt der Erfindung wird die Aufgabe durch die Vorrichtung mit den Merkmalen des Anspruchs 10 gelöst.

Schließlich wird die Aufgabe gelöst durch das Computerprogramm mit den Merkmalen des Anspruchs 13 und das Computerprogrammprodukt mit den Merkmalen des Anspruchs 14.

Das Verfahren der oben genannten Art ist erfindungsgemäß dadurch weitergebildet, dass die Marker mit einer an dem Fahrzeug angeordneten Digitalkamera erfasst werden und dass mittels Bildverarbeitung aus einer Lage mindestens eines Markerbilds im Erfassungsbereich der Digitalkamera eine Relativposition des Fahrzeugs bezüglich des jeweiligen Markers oder der jeweiligen Marker in Richtung einer Hauptbewegungsrichtung des Fahrzeugs entlang der Bahn und in mindestens einer Richtung quer zur Hauptbewegungsrichtung des Fahrzeugs bestimmt wird.

Die Vorrichtung der oben genannten Art ist erfindungsgemäß weitergebildet durch eine an dem Fahrzeug anzuordnende Digitalkamera zum Erfassen von entlang der Bahn angeordneten Markern und eine mit der Digitalkamera verbundene Recheneinrichtung, welche eingerichtet ist zum Bestimmen einer Relativposition des Fahrzeugs bezüglich mindestens eines Markers in Richtung einer Hauptbewegungsrichtung des Fahrzeugs entlang der Bahn und in mindestens einer Richtung quer zur Hauptbewegungsrichtung mittels Bildverarbeitung aus einer Lage des Bilds des jeweiligen Markers oder der jeweiligen Marker in einem Erfassungsbereich der Digitalkamera.

Bevorzugte Ausführungsvarianten des erfindungsgemäßen Verfahrens und vorteilhafte Ausgestaltungen der erfindungsgemäßen Vorrichtung sind Gegenstand der abhängigen Ansprüche.

Erfindungsgemäß wurde zunächst erkannt, dass mit Hilfe von Bildverarbeitungsverfahren eine Positionsbestimmung eines Fahrzeugs in sehr präziser Weise möglich ist, indem die Position oder Lage eines bestimmten Markers in einem Erfassungsbereich einer Digitalkamera bestimmt und ausgewertet wird.

Das erfindungsgemäße Verfahren, bei welchem es sich um ein Auflichtverfahren handelt, kann insbesondere auch eine Positionsinformation für ein stillstehendes Fahrzeug liefern.

Ein weiterer wesentlicher Vorteil der Erfindung kann darin gesehen werden, dass im Unterschied zu Verfahren aus dem Stand der Technik auch eine Positionsbestimmung quer zur Fahrt- oder Bewegungsrichtung möglich ist und durchgeführt wird.

Die Positionsinformation quer zur Fahrtrichtung kann besonders vorteilhaft für einen automatischen Ausgleich von temperatur- oder lastwechselbedingten Biegeverformungen verwendet werden.

Ein weiterer Vorteil der Erfindung kann darüber hinaus darin gesehen werden, dass bisher notwendige Abtastelemente, beispielsweise Lichtschranken, welche anfällig für Dejustierungen und Verschmutzungen und somit wartungsintensiv sind, nicht mehr notwendig sind. Dieser Vorteil kommt in besonderer Weise zum Tragen, wo an vielen Orten der Bahn eine Positionsbestimmung quer zur Fahrtrichtung durchgeführt werden soll. Hierfür musste bisher eine Vielzahl von Abtastelementen nebeneinander angeordnet werden.

Als Marker können grundsätzlich alle graphisch darstellbaren Codierungs- und Markierungstypen verwendet werden, deren Strukturen und damit die dort enthaltene Information mit einer Digitalkamera erkannt und ausgewertet werden können.

Bevorzugt werden Barcodes, insbesondere zweidimensionale Barcodes, eingesetzt.

Damit eine festgestellte Relativposition bezüglich eines bestimmten Markers grundsätzlich eindeutig einer bestimmten Absolutposition des Fahrzeugs zugeordnet werden kann, ist es weiterhin bevorzugt, wenn die verwendeten Marker unterschiedlich sind, also mittels Bildverarbeitung eindeutig unterschieden werden können.

Der Bereich erfassbarer Positionsänderungen quer zu einer Hauptbewegungsrichtung des Fahrzeugs wird vergrößert, wenn die Marker in mehreren Reihen entlang der Bahn angeordnet werden.

Als Digitalkamera können grundsätzlich bekannte und verfügbare Komponenten eingesetzt werden, beispielsweise kann es sich um eine Digitalkamera mit einem CCD- oder einem CMOS-Empfängerchip handeln.

Bei einer besonders bevorzugten Variante des erfindungsgemäßen Verfahrens werden aus Verschiebungen der Markerbilder im Erfassungsbereich der Digitalkamera Positionsänderungen des Fahrzeugs quer zu der Hauptbewegungsrichtung des Fahrzeugs bestimmt. Solche Verschiebungen, die beispielsweise auftreten, wenn sich das Fahrzeug bei im Wesentlichen gleichbleibendem Abstand zur Bahn seitlich zur Hauptbewegungsrichtung bewegt, lassen sich mit Methoden der Bilderkennung und Bildauswertung einfach feststellen und quantitativ auswerten. Die Hauptbewegungsrichtung wird vorliegend als x-Richtung bezeichnet. Die hier betrachtete Richtung seitlich zur Hauptbewegungsrichtung wird auch als y-Richtung bezeichnet.

Es werden aus Änderungen der Größe der Markerbilder Abstandsänderungen des Fahrzeugs zur Bahn bestimmt. Solche Abstandsänderungen des Fahrzeugs zur Bahn entsprechen einer Bewegung des Fahrzeugs in z-Richtung.

Um festgestellte Messwerte besser auswerten und zuordnen zu können, wird bevorzugt bei einer Erstinbetriebnahme eines Systems mindestens einmal eine Referenzfahrt durchgeführt, bei der zu Relativpositionen des Fahrzeugs in Hauptbewegungsrichtung zugehörige Relativpositionen des Fahrzeugs in mindestens einer Richtung quer zur Hauptbewegungsrichtung aufgenommen und abgespeichert werden.

Bei einer unaufwändig zu verwirklichenden Variante werden beispielsweise Fehlersignale ausgegeben, wenn die für die Relativpositionen des Fahrzeugs in Richtungen quer zur Hauptbewegungsrichtung bestimmten Werte vorgegebene Toleranzintervalle verlassen.

Bei einer besonders bevorzugten Ausgestaltung des erfindungsgemäßen Verfahrens kann aus Verschiebungen von Markerbildern im Erfassungsbereich der Digitalkamera ein Gewicht einer Last, mit welcher das Fahrzeug beaufschlagt ist, bestimmt werden. Die Messvorrichtung kann demgemäß für Fahrzeuge, welche zum Transport von Lasten bestimmt sind, gleichzeitig auch als Waage dienen. Zweckmäßig wird hierzu die Digitalkamera mit einem Bestandteil des Fahrzeugs gekoppelt, welcher bei Beaufschlagen des Fahrzeugs mit einer zu transportierenden Last elastisch verformbar ist.

Bei einer einfachen Variante kann beispielsweise die Digitalkamera mit einer Feder gekoppelt sein, welche an einem Grundrahmen oder Grundträger des Fahrzeugs montiert ist.

Besonders vorteilhaft können das erfindungsgemäße Verfahren und die erfindungsgemäße Vorrichtung bei Fahrzeugen eingesetzt werden, die sich auf Laufrollen auf ihrer jeweiligen Bahn bewegen. Solche Laufrollen nutzen sich mit der Zeit ab und müssen ausgetauscht werden. Einerseits soll dabei einem Ausfall der Laufrollen und damit des Fahrzeugs vorgebeugt werden. Andererseits sollen die Laufrollen aber praktisch bis ans Ende ihrer Lebensdauer benutzt werden können.

Hierzu kann bei einer besonders vorteilhaften Variante des erfindungsgemäßen Verfahrens aus Verschiebungen von Markerbildern im Erfassungsbereich der Digitalkamera eine Abnutzung der Laufrollen bestimmt werden.

Diese Verfahrensvariante kann insbesondere auch dann zum Einsatz kommen, wenn bei Beaufschlagung des Fahrzeugs mit einer Last eine Wägung durchgeführt wird.

Das erfindungsgemäße Verfahren kann auch so durchgeführt werden und das erfindungsgemäße Computerprogramm dementsprechend so aufgebaut sein, dass bei Auswertung zunächst keine Identifizierung der einzelnen Marker erfolgt. Die Positionsinformation wird dann gewonnen durch Zählen von nachgewiesenen charakteristischen Strukturen, beispielsweise durch Zählen der nachgewiesenen Kanten.

Bei diesen Verfahrensvarianten kann die Positionsinformation besonders rasch bereitgestellt werden, da zum Erkennen nur der charakteristischen Strukturen vergleichsweise wenige Pixel ausreichend sein können.

Voraussetzung hierfür ist, dass die Abstände der Marker zueinander bekannt sind. Im Regelfall werden hierzu die Marker äquidistant zueinander entlang der Bahn angeordnet.

Für die Erkennung und Auswertung der Barcodes mit Hilfe von bildverarbeitenden Verfahren ist es zweckmäßig, wenn der Abstand zwischen einzelnen zweidimensionalen Barcodes mindestens so groß ist wie die kleinste in den Barcodes auftretende Struktur, also mindestens so groß wie eine minimale Informationseinheit, insbesondere mindestens so groß wie ein Bit, des zweidimensionalen Barcodes.

Prinzipiell kann es ausreichend sein, aus den festgestellten Markerbildern im Erfassungsbereich der Digitalkamera jeweils die Relativposition des Fahrzeugs bezüglich des jeweiligen Markers zu bestimmen. Bei einer Weiterbildung des erfindungsgemäßen Verfahrens kann zusätzlich aus der Relativposition bezüglich eines bestimmten Markers und einer bekannten Absolutposition dieses Markers eine Absolutposition des Fahrzeugs, beispielsweise bezogen auf einen bestimmten Punkt in einer Fertigungshalle, bestimmt werden. Die Absolutposition kann direkt ausgegeben und beispielsweise von einer speicherprogrammierbaren Steuerung an andere Komponenten weitergegeben werden.

Die Rechen- und Auswerteschritte des erfindungsgemäßen Verfahrens werden bevorzugt auf der Recheneinrichtung als Computerprogramm ausgeführt. In grundsätzlich bekannter Weise kann dieses Computerprogramm auf einem computerlesbaren Datenträger, insbesondere in einem ROM eines Mikrocontrollers oder eines programmierbaren Logikbausteins, gespeichert sein.

Weitere Vorteile und Merkmale der Erfindung werden nachstehend mit Bezug auf die beigefügten schematischen Figuren beschrieben. Hierin zeigt:
- Fig. 1: eine schematische Seitenansicht einer erfindungsgemäßen Vorrichtung an einer Laufkatze an einem Kranbalken;
- Fig. 2: in schematischer Ansicht den Erfassungsbereich einer Digitalkamera einer erfindungsgemäßen Vorrichtung zur Illustrierung einer ersten Verfahrensvariante;
- Fig. 3: in schematischer Ansicht den Erfassungsbereich der Digitalkamera einer erfindungsgemäßen Vorrichtung zur Illustrierung einer zweiten Verfahrensvariante; und
- Fig. 4: ein weiteres Ausführungsbeispiel einer erfindungsgemäßen Vorrichtung.

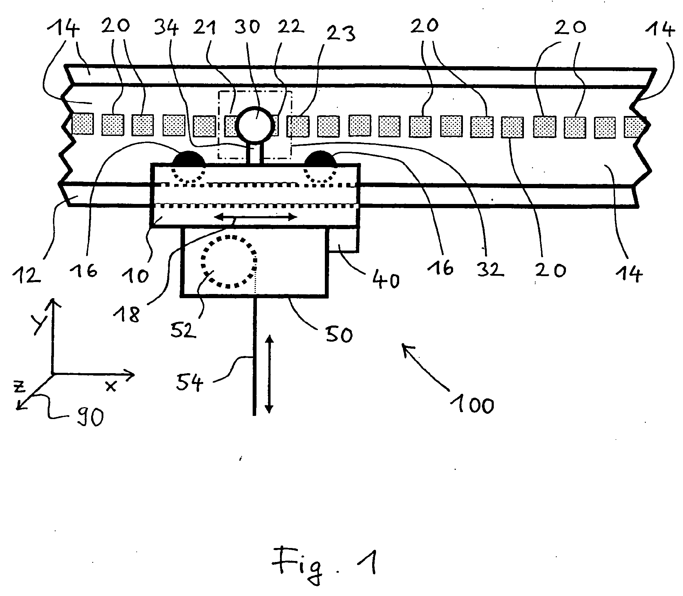

Ein Anwendungsbeispiel für das erfindungsgemäße Verfahren und eine erfindungsgemäße Vorrichtung 100 wird mit Bezug auf Figur 1 erläutert. Gezeigt ist dort ein Fahrzeug 10, welches auf einem Träger 14 mit Hilfe von Rollen 16 und einem hier nicht gezeigten Antrieb verfahrbar ist. Fahrzeuge der in Figur 1 gezeigten Art werden auch als Laufkatzen bezeichnet. Der Träger 14 bildet eine Bahn 12, entlang welcher das Fahrzeug 10 beweglich ist. Die Bewegungsrichtung oder Hauptbewegungsrichtung des Fahrzeugs 10 ist in Figur 1 die x-Richtung und durch einen Doppelpfeil 18 angegeben. In einem Unterbau 50 des Fahrzeugs 10 ist eine hier schematisch dargestellte Seilwinde 52 positioniert, mit welcher über ein Seil 54 Lasten geladen und transportiert werden können. Die Raumrichtungen sind außerdem durch ein Koordinatensystem 90 angedeutet.

Die erfindungsgemäße Vorrichtung 100 weist als wesentliche Bestandteile eine Digitalkamera 30 und eine Recheneinrichtung 40 auf, mit welcher die Digitalkamera 30 wirkungsmäßig, typischerweise durch Verbindungskabel, verbunden ist. Bei besonderen Varianten kann die Recheneinrichtung 40 auch in die Digitalkamera 30 integriert sein.

Die Digitalkamera 30 ist über einen Haltearm 34 starr mit dem Fahrzeug 10 verbunden. Ein hier im Wesentlichen quadratischer Erfassungsbereich 32 der Digitalkamera 30 ist ebenfalls schematisch dargestellt.

In der erfindungsgemäß vorhandenen Recheneinrichtung 40 wird das erfindungsgemäße Computerprogramm und somit das erfindungsgemäße Verfahren abgearbeitet. Ein Computerprogrammprodukt im Sinn der Erfindung kann insbesondere die Recheneinrichtung 40 selbst mit zugehörigem ROM-Speicher sein.

Wesentlicher Bestandteil des hier beschriebenen erfindungsgemäßen optischen Positionierungssystems sind außerdem eine Vielzahl von insbesondere jeweils unterschiedlichen Markern 20, wobei es sich im gezeigten Beispiel um zweidimensionale Barcodes handelt. Diese Marker 20 sind entlang des Trägers 14 äquidistant angebracht. Typischerweise handelt es sich hierbei um aufgeklebte, mit den Barcodes bedruckte Bänder. In der gezeigten Situation werden von der Digitalkamera 30 die Marker 21 und 22 vollständig erfasst. Außerdem wird ein Randbereich des Markers 23 erfasst.

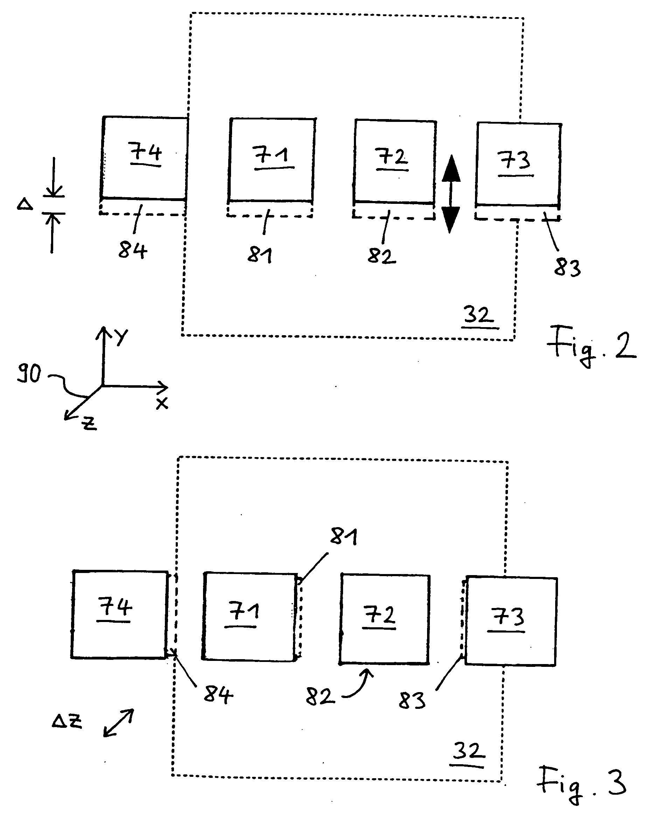

Die Arbeitsweise der erfindungsgemäßen Vorrichtung und des erfindungsgemäßen Verfahrens werden mit Bezug auf die Figuren 2 und 3 näher erläutert.

Äquivalente Komponenten sind in allen Figuren mit denselben Bezugszeichen versehen.

Das erfindungsgemäße Verfahren basiert in einem wesentlichen Gesichtspunkt darauf, Daten, welche sich aus der Bildverarbeitung ergeben und Hinweise auf eine y-Auslenkung oder eine z-Auslenkung ergeben, für weitere Auswertungen zu nutzen. Eine y-Auslenkung kann sich beispielsweise durch eine Verschiebung der Markerbilder innerhalb des Erfassungsbereichs 32 der Kamera 30 ergeben.

Dies wird mit Bezug auf Fig. 2 erläutert. Hierin ist ein Erfassungsbereich 32 einer Digitalkamera 30 gezeigt. Dabei fallen die Bilder 71, 72 von zwei Barcodes vollständig in den Erfassungsbereich 32 der Digitalkamera 30. Das Bild 73 eines weiteren Barcodes liegt noch zur Hälfte im Erfassungsbereich 32 und das Bild 74 eines weiteren Barcodes liegt schließlich vollständig außerhalb des Erfassungsbereichs 32. Die Markerbilder 71, 72, 73, 74 sind im gezeigten Beispiel gegenüber Originalpositionen, welche durch die Bezugszeichen 81, 82, 83, 84 gekennzeichnet sind, nach oben verschoben. Dies wurde durch eine Verschiebung der Digitalkamera 30 nach unten, beispielsweise aufgrund von abgenutzten Laufrollen des Fahrzeugs, verursacht. Aus einer Verschiebung Δ der Markerbilder 71, 72, 73, 74 im Erfassungsbereich 32 der Digitalkamera 30 wird sodann erfindungsgemäß eine Verschiebung Δy des Fahrzeugs 10 in y-Richtung quantitativ bestimmt.

Durch geschicktes Betreiben der vorhandenen Komponenten können so wichtige Messinformationen bereitgestellt werden.

Die entsprechenden Raumrichtungen sind auch für die Figuren 2 und 3 durch ein Koordinatensystem 90 angegeben.

Mit Bezug auf Fig. 3 wird erläutert, wie eine Bewegung in z-Richtung festgestellt wird. Fig. 3 zeigt eine Situation, bei welcher sich die Kamera näher als normal an den Barcodes 20 befindet. Dementsprechend sind die Markerbilder 71, 72, 73, 74 der Barcodes gegenüber den Originalbildern 81, 82, 83, 84 vergrößert und darüber hinaus verschoben. Aus der festgestellten Größenänderung der Markerbilder 71, 72, 73, 74 wird dann erfindungsgemäß eine Abstandsänderung Δz des Fahrzeugs 10 in z-Richtung errechnet.

Um die realen Positionen zu erhalten, ist es nicht unbedingt nötig, diese Positionen aus den Bilddaten geometrisch zu errechnen. Vielmehr können die entsprechenden Größen der Markerbilder in mehreren Referenz- oder Einlernfahrten für verschiedene z-Abstände eingelernt werden. Zur Auswertung muss dann lediglich auf die entsprechenden Tabellen zurückgegriffen werden.

Aus einer y-Auslenkung kann beispielsweise die Abnutzung von Laufrollen einer Einschienenhängebahn bestimmt werden und die entsprechende Einschienenhängebahn kann somit rechtzeitig vor einer vollkommenen Abnutzung und demgemäß rechtzeitig vor einem Ausfall einer Wartung zugeführt werden.

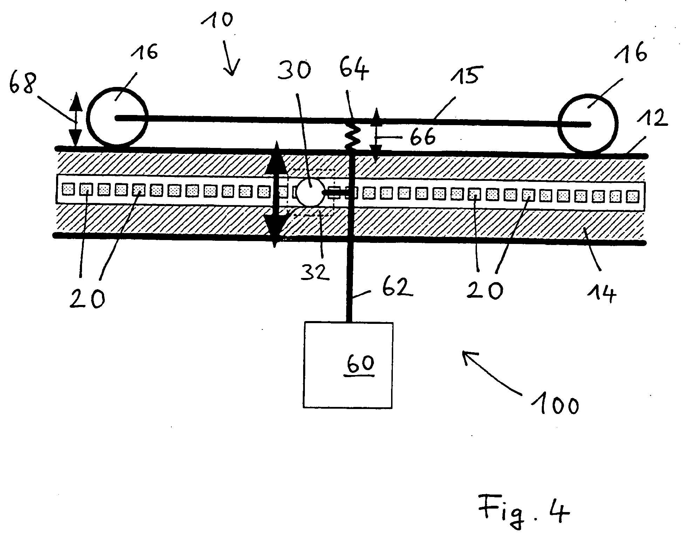

Dies wird mit Bezug auf Fig. 4 erläutert. Hierin ist schematisch ein weiteres Ausführungsbeispiel einer erfindungsgemäßen Vorrichtung 100 an einem Fahrzeug 10 gezeigt. Das Fahrzeug 10, wobei es sich im gezeigten Beispiel um eine EinschienenHängebahn handelt, ist dabei zum Tragen von Lasten 60 eingerichtet und kann mit Hilfe von Laufrollen 16 auf einem Träger 14 abrollen. Eine Digitalkamera 30 ist an einem Lastarm 62, an dem eine zu transportierende Last 60 aufgehängt ist, montiert. Im gezeigten Beispiel ist der Lastarm 62 über eine Feder 64 mit einem Grundrahmen 15 des Fahrzeugs 10, der auch als Fahrkorb bezeichnet werden kann, verbunden.

Wenn sich die Laufrollen 16 abnutzen, wird der Abstand zwischen dem Grundrahmen 15 und dem Träger 14 kleiner und die Digitalkamera 30 senkt sich demgemäß gegenüber dem Träger 14 und den Barcodes 20 ab. Diese Absenkung, welche in Fig. 4 durch Doppelpfeile 68 und 66 angedeutet ist, führt zu einer Verschiebung der Bilder der Barcodes 20 im Erfassungsbereich 32 nach oben, siehe Fig. 2. Die von der Digitalkamera 30 wahrgenommene y-Position ist demgemäß proportional zu einer Absenkung des Fahrzeugs 10 gegenüber der Bahn 12.

Darüber hinaus kann über die y-Position auch ein Wiegeverfahren realisiert werden. Hierzu kann die Vorrichtung 100 so mit dem Fahrzeug 10, beispielsweise einer Einschienenhängebahn, gekoppelt werden, dass sich die Digitalkamera 30 mit sich ändernder Last 60 verschiebt. Im gezeigten schematischen Beispiel ist die Digitalkamera 30 über eine Feder 64 mit dem Grundträger 15 des Fahrzeugs gekoppelt. Proportional zum Gewicht bewegt sich die Digitalkamera 30 demgemäß nach unten. Wenn die Last 60 wieder abgenommen wird, bewegt sich die Digitalkamera 30 entsprechend wieder nach oben. Die Bewegungsrichtung der Digitalkamera 30 bei dem Einsatz der erfindungsgemäßen Vorrichtung 100 als Waage ist in Fig. 4 mit einem Doppelpfeil 66 angedeutet.

Über diese Messverfahren hinaus lassen sich die ermittelten Diagnosedaten auch noch für weitere Anwendungsfälle einsetzen.

Beispielsweise können bei jeder Fahrt, insbesondere bei einer ersten Inbetriebnahme eines Messsystems, die Positionen der jeweiligen Barcodes über die y-Position und die z-Position eingestellt werden.

Eine komplette Anlage lässt sich mit diesen beiden Werten auch sehr gut gegen Abnutzungen und Alterungserscheinungen überwachen. Bei einer Referenzfahrt werden dann beispielsweise die y- und z-Positionen zu jeder x-Position abgespeichert.

Bei jeder folgenden Fahrt werden die dann neu aufgenommenen Daten mit denjenigen der Referenzfahrt verglichen. Sofern Abweichungen vorliegen oder die Abweichungen vorgegebene Toleranzintervalle überschreiten, kann eine übergeordnete Rechen- oder Steuerungseinrichtung, beispielsweise eine speicherprogrammierbare Steuerung, benachrichtigt werden und die Anlage kann beim nächsten Serviceintervall rechtzeitig in die Wartung aufgenommen werden, ohne dass ein Ausfall des Betriebs erfolgt.

Mit der vorliegenden Erfindung werden ein neues Verfahren und eine neue Vorrichtung zum Bestimmen der Position eines Fahrzeugs angegeben. Mit Hilfe von grundsätzlich bekannten Komponenten wird hier auf einfache, zuverlässige und störungsunanfällige Weise die Position von Fahrzeugen bestimmt. Im Vergleich zum Stand der Technik sind erheblich längere Fahrwege möglich und ein besonderer Vorteil besteht darin, dass auch Abweichungen von der Normalbahn quer zu einer Hauptbewegungsrichtung erfasst und ausgegeben werden können. Die Erfindung wurde vorstehend für Einschienen-Hängebahnen in weiteren Details beschrieben, kann aber auch bei anderen Systemen in entsprechender Weise eingesetzt werden.

## Patentansprüche

1. Verfahren zum Bestimmen der Position eines Fahrzeugs, welches entlang einer Bahn (12) bewegt wird,
wobei entlang der Bahn (12) Marker (20), insbesondere Codeträger oder Barcodes, angeordnet sind,
**dadurch gekennzeichnet,**
**dass** die Marker (20) mit einer an dem Fahrzeug (10) angeordneten Digitalkamera (30) erfasst werden und
**dass** mittels Bildverarbeitung aus einer Lage mindestens eines Markerbilds (71 - 74) im Erfassungsbereich (32) der Digitalkamera (30) eine Relativposition des Fahrzeugs (10) bezüglich des jeweiligen Markers (21, 22, 23) oder der jeweiligen Marker (21, 22, 23) in Richtung einer Hauptbewegungsrichtung (x) des Fahrzeugs (10) entlang der Bahn (12) und in mindestens einer Richtung (y, z) quer zur Hauptbewegungsrichtung (x) bestimmt wird und
**dass** aus Änderungen der Größe der Markerbilder (71 - 74) Abstandsänderungen (Δz) des Fahrzeugs (10) zur Bahn (12) bestimmt werden.

2. Verfahren nach Anspruch 1,
**dadurch gekennzeichnet,**
**dass** aus Verschiebungen (Δ) der Markerbilder (71 - 74) im Erfassungsbereich (32) der Digitalkamera (30) Positionsänderungen (Δy) des Fahrzeugs (10) quer zu der Hauptbewegungsrichtung (x) des Fahrzeugs (10) bestimmt werden.

3. Verfahren nach Anspruch 1 oder 2,
**dadurch gekennzeichnet,**
**dass** bei einer Erstinbetriebnahme eines Systems mindestens einmal eine Referenzfahrt durchgeführt wird, bei der zu Relativpositionen des Fahrzeugs (10) in Hauptbewegungsrichtung (x) zugehörige Relativpositionen des Fahrzeugs (10) in mindestens einer Richtung (y, z) quer zur Hauptbewegungsrichtung (x) aufgenommen und abgespeichert werden.

4. Verfahren nach einem der Ansprüche 1 bis 3,
**dadurch gekennzeichnet,**
**dass** Fehlersignale ausgegeben werden, wenn die für die Relativpositionen des Fahrzeugs (10) in Richtungen (y, z) quer zur Hauptbewegungsrichtung (x) bestimmte Werte vorgegebene Toleranzintervalle verlassen.

5. Verfahren nach einem der Ansprüche 1 bis 4,
**dadurch gekennzeichnet,**
**dass** als Marker (20) zweidimensionale Barcodes (21, 22, 23) verwendet werden.

6. Verfahren nach einem der Ansprüche 1 bis 5,
**dadurch gekennzeichnet,**
**dass** die Marker (20) in mehreren Reihen entlang der Bahn (12) angeordnet werden.

7. Verfahren nach einem der Ansprüche 1 bis 6,
**dadurch gekennzeichnet,**
**dass** aus Verschiebungen (Δ) von Markerbildern (71 - 74) im Erfassungsbereich (32) der Digitalkamera (30) ein Gewicht einer Last (60), mit welcher das Fahrzeug (10) beaufschlagt ist, bestimmt wird.

8. Verfahren nach einem der Ansprüche 1 bis 7,
**dadurch gekennzeichnet,**
**dass** das Fahrzeug (10) Laufrollen (16) aufweist und
**dass** aus Verschiebungen (Δ) von Markerbildern (71 - 74) im Erfassungsbereich (32) der Digitalkamera (30) eine Abnutzung der Laufrollen (16) bestimmt wird.

9. Verfahren nach einem der Ansprüche 1 bis 8,
**dadurch gekennzeichnet,**
**dass** aus den für das Fahrzeug (10) ermittelten Relativpositionen relativ zu einzelnen Markern (21, 22. 23) Absolutpositionen des Fahrzeugs (10) bezüglich der Umgebung auf Grundlage von bekannten Positionen dieser Marker (21, 22, 23) bezüglich der Umgebung bestimmt werden.

10. Vorrichtung zum Bestimmen der Position eines Fahrzeugs, welches entlang einer Bahn (12) beweglich ist, insbesondere zur Durchführung des Verfahrens nach einem der Ansprüche 1 bis 9,
**gekennzeichnet durch**
eine an dem Fahrzeug (10) anzuordnende Digitalkamera (30) zum Erfassen von entlang der Bahn (12) angeordneten Markern (20), insbesondere Codeträgem oder Barcodes, und
eine Recheneinrichtung (40), welche eingerichtet ist
zum Bestimmen einer Relativposition des Fahrzeugs (10) bezüglich mindestens eines Markers (21, 22, 23) in Richtung einer Hauptbewegungsrichtung (x) des Fahrzeugs (10) entlang der Bahn (12) und in mindestens einer Richtung (y, z) quer zur Hauptbewegungsrichtung (x) mittels Bildverarbeitung aus einer Lage des Bilds des jeweiligen Markers (21, 22, 23) oder der jeweiligen Marker (21, 22, 23) in einem Erfassungsbereich (32) der Digitalkamera (30) und
zum Bestimmen von Abstandsänderungen (Δz) des Fahrzeugs (10) zur Bahn (12) aus Änderungen der Größe der Markerbilder (71 - 74).

11. Vorrichtung nach Anspruch 10,
**dadurch gekennzeichnet,**
**dass** das Fahrzeug (10) zum Transport von Lasten (60) bestimmt ist und dass die Digitalkamera (30) mit einem Bestandteil des Fahrzeugs (10) gekoppelt ist, welcher bei Beaufschlagen des Fahrzeugs (10) mit einer zu transportierenden Last (60) elastisch verformbar ist.

12. Vorrichtung nach Anspruch 10 oder 11,
**dadurch gekennzeichnet,**
**dass** die Digitalkamera (30) mit einer an einem Grundrahmen oder Grundträger (15) des Fahrzeugs (10) angeordneten Feder (64) gekoppelt ist.

13. Computerprogramm mit Programmcodemitteln, um die Rechen- und Auswerteschritte eines Verfahrens nach einem der Ansprüche 1 bis 9 durchzuführen, wenn das Computerprogramm auf einem mit der Digitalkamera (30) wirkungsmäßig verbundenen Computer, insbesondere der Recheneinrichtung (40) gemäß Anspruch 10, ausgeführt wird.

14. Computerprogrammprodukt mit Programmcodemitteln, die auf einem computerlesbaren Datenträger gespeichert sind, um die Rechen- und Auswerteschritte eines Verfahrens nach einem der Ansprüche 1 bis 9 durchzuführen, wenn das Computerprogramm auf einem mit der Digitalkamera (30) wirkungsmäßig verbundenen Computer, insbesondere der Recheneinrichtung (40) gemäß Anspruch 10, ausgeführt wird.

## Claims

1. Method for determining the position of a vehicle which is moved along a path (12),
where markers (20), particularly code carriers or barcodes, are positioned along the path (12),
**characterized in that**
the markers (20) are captured with a digital camera (30) placed on the vehicle (10) and
that by means of image processing from a position of at least one marker image (71-74) in the detection area (32) of the digital camera (30) a relative position of the vehicle (10) relative to the respective marker (21, 22, 23) or the respective markers (21, 22, 23) in the direction of a main movement direction (x) of the vehicle (10) along the path (12) and in at least one direction (y, z) transverse to the main movement direction (x) is determined and
that distance changes (Δz) of the vehicle (10) to the path (12) are determined from changes in the size of the marker images (71-74).

2. Method according to claim 1,
**characterized in that**
position changes (Δy) of the vehicle (10) transverse to the main movement direction (x) of the vehicle (10) are determined on the basis of shifts (Δ) of the marker images (71-74) in the detection area (32) of the digital camera (30).

3. Method according to claim 1 or 2,
**characterized in that**,
when a system is put into operation for the first time, at least one reference run is carried out in which relative positions of the vehicle (10) in at least one direction (y, z) transverse to the main movement direction (x) associated with the relative positions of the vehicle (10) in the main movement direction (x) are recorded and stored.

4. Method according to one of the claims 1 to 3,
**characterized in that**
error signals are outputted if the values determined for the relative positions of the vehicle (10) in directions (y, z) transverse to the main movement direction (x) pass beyond predetermined tolerance intervals.

5. Method according to one of the claims 1 to 4,
**characterized in that**
two-dimensional barcodes (21, 22, 23) are used as markers (20).

6. Method according to one of the claims 1 to 5,
**characterized in that**
the markers (20) are arranged in several rows along the path (12).

7. Method according to one of the claims 1 to 6
**characterized in that**
on the basis of shifts (Δ) of marker images (71-74) in the detection area (32) of the digital camera (30) a weight of a load (60) supplied to the vehicle (10) is determined.

8. Method according to one of the claims 1 to 7,
**characterized in**
**that** the vehicle (10) has rollers (16) and
**that** on the basis of shifts (Δ) of marker images (71-74) in the detection area (32) of the digital camera (30) a wear to the rollers (16) is determined.

9. Method according to one of the claims 1 to 8,
**characterized in that**
from the relative positions relative to individual markers (21, 22, 23) determined for the vehicle (10) absolute positions of said vehicle (10) relative to the environment are determined on the basis of known positions of said markers (21, 22, 23) with respect to the environment.

10. Apparatus for determining the position of a vehicle movable along a path (12), particularly for performing the method according to one of the claims 1 to 9,
**characterized by**
a digital camera (30) to be placed on the vehicle (10) for detecting markers (20), particularly code carriers or barcodes, positioned along the path (12), and
a computing device (40) set up
for determining a relative position of the vehicle (10) relative to at least one marker (21, 22, 23) in the direction of a main movement direction (x) of the vehicle (10) along the path (12) and in at least one direction (y, z) transverse to the main movement direction (x) by means of image processing from a position of the image of the given marker (21, 22, 23) or the given markers (21, 22,23) in a detection area (32) of the digital camera (30) and
for determining the distance changes (Δz) of the vehicle (10) to the path (12) from changes in the size of the marker images (71-74).

11. Apparatus according to claim 10,
**characterized in that**
the vehicle (10) is intended for transporting loads (60) and
that the digital camera (30) is coupled to a component of the vehicle (10), which is elastically deformable when the vehicle (10) is subject to a load (60) to be transported.

12. Apparatus according to claim 10 or 11,
**characterized in that**
the digital camera (30) is coupled to a spring (64) located on a base frame or a base support (15) of the vehicle (10).

13. Computer program with program code means in order to carry out the computing and evaluation steps of a method according to one of the claims 1 to 9, if the computer program is performed on a computer functionally connected to the digital camera (30), in particular on the computing device (40) according to claim 10.

14. Computer program product with program code means stored on a computer-readable data carrier, in order to carry out the computing and evaluating steps of a method according to one of the claims 1 to 9, if the computer program is performed on a computer functionally connected to the digital camera (30), particularly on the computing device (40) according to claim 10.

## Revendications

1. Procédé de détermination de la position d'un véhicule qui est déplacé le long d'une voie (12),
des marqueurs (20), en particulier des supports de code ou des codes-barres, étant agencés le long de la voie (12),
**caractérisé en ce**
**que** les marqueurs (20) sont détectés avec une caméra numérique (30) agencée sur le véhicule (10), et
en ce qu'à partir d'une position d'au moins une image de marqueur (71 - 74) dans la zone de détection (32) de la caméra numérique (30), une position relative du véhicule (10) par rapport au marqueur (21, 22, 23) respectif ou aux marqueurs (21, 22, 23) respectifs, dans une direction de déplacement principale (x) du véhicule (10) le long de la voie (12) et dans au moins une direction (y, z) transversale par rapport à la direction de déplacement principale (x), est déterminée à l'aide d'un traitement d'image et
en ce que des variations de distance (Δz) du véhicule (10) par rapport à la voie (12) sont déterminées à partir de variations de la grandeur des images de marqueurs (71 - 74).

2. Procédé selon la revendication 1,
**caractérisé en ce**
**que** des variations de position (Δy) du véhicule (10) transversalement à la direction de déplacement principale (x) du véhicule (10) sont déterminées à partir de décalages (Δ) des images de marqueurs (71 - 74) dans la zone de détection (32) de la caméra numérique (30).

3. Procédé selon la revendication 1 ou 2,
**caractérisé en ce**
**que** lors d'une première mise en service d'un système, un trajet de référence est effectué au moins une fois, lors duquel des positions relatives, associées à des positions relatives du véhicule (10) dans la direction de déplacement principale (x), du véhicule (10) dans au moins une direction (y, z) transversale à la direction de déplacement principale (x) sont enregistrées et mémorisées.

4. Procédé selon l'une des revendications 1 à 3,
**caractérisé en ce**
**que** des signaux d'erreur sont émis lorsque les valeurs déterminées pour les positions relatives du véhicule (10) dans des directions (y, z) transversales à la direction principale de déplacement (x) ne sont plus comprises dans les fourchettes de tolérance prédéfinies.

5. Procédé selon l'une des revendications 1 à 4,
**caractérisé en ce**
**que** des code barres (21, 22, 23) en deux dimensions sont utilisés comme marqueurs (20).

6. Procédé selon l'une des revendications 1 à 5,
**caractérisé en ce**
**que** les marqueurs (20) sont disposés en plusieurs rangées le long de la voie (12).

7. Procédé selon l'une des revendications 1 à 6,
**caractérisé en ce**
**qu'**un poids d'une charge (60), à l'action de laquelle le véhicule (10) est soumis, est déterminé à partir de décalages (Δ) d'images de marqueurs (71 -74) dans la zone de détection (32) de la caméra numérique (30).

8. Procédé selon l'une des revendications 1 à 7,
**caractérisé en ce**
**que** le véhicule (10) présente des galets de roulement (16), et
en ce qu'une usure des galets de roulement (16) est déterminée à partir des décalages (Δ) d'images de marqueurs (71 - 74) dans la zone de détection (32) de la caméra numérique (30).

9. Procédé selon l'une des revendications 1 à 8,
**caractérisé en ce**
**que** des positions absolues du véhicule (10) par rapport à l'environnement sont déterminées à partir des positions relatives, déterminées pour le véhicule (10) par rapport aux marqueurs (21, 22, 23) individuels sur la base de positions connues de ces marqueurs (21, 22, 23) par rapport à l'environnement.

10. Dispositif de détermination de la position d'un véhicule qui est mobile le long d'une voie (12), en particulier pour la mise en oeuvre du procédé selon l'une des revendications 1 à 9,
**caractérisé par**
une caméra numérique (30) à agencer sur le véhicule (10) pour la détection de marqueurs (20), agencés le long de la voie (12), en particulier de supports de code ou de codes-barres, et
un dispositif de calcul (40) qui est aménagé
pour la détermination d'une position relative du véhicule (10) par rapport au moins à un marqueur (21, 22, 23) dans la direction d'une direction de déplacement principale (x) du véhicule (10) le long de la voie (12) et dans au moins une direction (y, z) transversale à la direction de déplacement principale (x) à l'aide d'un traitement d'image à partir d'une position de l'image du marqueur (21, 22, 23) respectif ou des marqueurs (21, 22, 23) respectifs dans une zone de détection (32) de la caméra numérique (30) et
pour la détermination de variations de distance (Δz) du véhicule (10) par rapport à la voie (12) à partir de variations de la grandeur des images de marqueurs (71 - 74).

11. Dispositif selon la revendication 10,
**caractérisé en ce**
**que** le véhicule (10) est destiné au transport de charges (60), et
en ce que la caméra numérique (30) est couplée à un composant du véhicule (10), qui peut se déformer de manière élastique lorsque le véhicule (10) est soumis à l'action d'une charge (60) à transporter.

12. Dispositif selon la revendication 10 ou 11,
**caractérisé en ce**
**que** la caméra numérique (30) est couplée à un ressort (64) disposé au niveau d'un châssis de base ou d'un support de base (15) du véhicule (10).

13. Programme informatique avec des moyens de code de programme, afin de mettre en oeuvre les étapes de calcul et d'évaluation d'un procédé selon l'une des revendications 1 à 9, lorsque le programme informatique est exécuté sur un ordinateur connecté de manière fonctionnelle à la caméra numérique (30), en particulier le dispositif de calcul (40) selon la revendication 10.

14. Produit de programme informatique avec des moyens de code de programme qui sont enregistrés sur un support de données lisible sur ordinateur, afin de mettre en oeuvre les étapes de calcul et d'évaluation d'un procédé selon l'une des revendications 1 à 9, lorsque le programme informatique est exécuté sur un ordinateur relié de manière fonctionnelle à la caméra numérique (30), en particulier le dispositif de calcul (40) selon la revendication 10.
